# EUROPEAN PATENT SPECIFICATION

(11) **EP 3 521 346 B1**
(45) Date of publication and mention of the grant of the patent: **26.07.2023**
(21) Application number: 17856089.2
(22) Date of filing: 26.09.2017
(51) Int. Cl.: C08J 5/04, C08K 5/098, C08K 7/02, C08L 101/00, C08J 5/06, C08J 5/08, C08J 5/10, B29C 43/00, B29C 43/02

(54) **RESIN COMPOSITION**
HARZZUSAMMENSETZUNG
COMPOSITION DE RÉSINE

(30) Priority: 30.09.2016 JP 2016193106
(43) Date of publication of application: 07.08.2019
(73) Proprietor: Daicel Polymer Ltd., Tokyo 108-8231 (JP)
(72) Inventor: KOSAKA, Shigeyuki, Himeji-shi, Hyogo 671-1123 (JP)
(74) Representative: Grünecker Patent- und Rechtsanwälte PartG mbB
(86) International application number: PCT/JP2017/034666
(87) International publication number: WO 2018/062139

(56) References cited:
- EP-A1- 2 020 282
- EP-A1- 2 151 418
- EP-A1- 2 924 164
- EP-A1- 3 029 089
- EP-A1- 3 159 371
- JP-A- 2001 200 068
- JP-A- 2012 052 093
- JP-A- 2012 061 777
- JP-A- 2014 015 592
- JP-B2- 4 743 592

## Description

### Technical Field

The present invention relates to a resin composition containing a resin-impregnated fiber bundle and a lubricant.

### Background Art

A method for obtaining a molded article by injection-molding a pellet composed of a thermoplastic resin and a reinforcing fiber is generally used. However, when an injection-molding method is employed, reinforcing fibers are broken and shortened during the process of injection-molding, and the reinforcing effects thereof are disadvantageously deteriorated.

JP-B 3631994 (Patent Document 1) and JP-B 4743592 (Patent Document 2) disclose an invention wherein a press molding method is employed instead of an injection molding method.

JP-B 3631994 discloses an invention on an long-fiber-reinforced thermoplastic resin (hereinafter, referred to as L-FRTP) sheet, wherein wire rods, each of which has a width of from 0.2 to 5 mm and a length of from 10 to 150 mm and is made of an unidirectionally L-FRTP, are oriented at random and fixed together at intersections thereof, and the sheet has a basis weight of 30 to 500 g/m² and a thickness of 0.1 to 1 mm and is provided with openings therein; and also an invention on a composite structure, wherein the L-FRTP sheet is arranged on at least one surface or an interior of a specific base material (Claims). The section for Advantages of the Invention (paragraph 0051) describes that the surface rigidity of an L-FRTP sheet can be improved.

JP-B 3631994 describes that the L-FRTP has a circular or elliptical cross-sectional shape, and a long diameter/short diameter ratio of the cross-section is 3 or less (paragraph 0016). However, those used in Example are only L-FRTP having a circular cross-sectional shape (Example 1) and L-FRTP having an elliptical cross-sectional shape is not used. This means it is disclosed that those with a circular cross-section are preferred to obtain the advantages of the invention.

EP 2 924 164 A1 discloses a chopped carbon fiber bundle comprising a carbon fiber bundle having a total fineness of from 25,000 dtex to 45,000 dtex (inclusive); and a sizing agent in an amount of from 1% by mass to 5% by mass (inclusive) relative to the total mass of the chopped carbon fiber bundle, wherein the length (L) of the chopped carbon fiber bundle along the fiber direction of the carbon fiber bundle is from 1 mm to 50 mm (inclusive), the ratio (Dmax/Dmin) of the longest diameter (Dmax) and the shortest diameter (Dmin) of a cross-section perpendicular to the fiber direction of the chopped carbon fiber bundle is from 6.0 to 18.0 (inclusive), and the orientation parameter of the single fibers present at the surface of the chopped carbon fiber bundle is 4.0 or less.

Patent Document 2 discloses an invention on a long fiber reinforced thermoplastic resin linear molding material and a method for producing a long fiber reinforced thermoplastic resin molded article (Claims). Regarding the cross-sectional shape of the long fiber reinforced thermoplastic resin linear molding material, Patent Document 2 describes that "(a) The cross-sectional shape is close to a circle or an ellipse. This makes it easy to spray the linear molding material in a three-dimensional orientation, and press-molding of thus sprayed material can provide a sheet material or a molded article having reinforcement fibers oriented in a three-dimensional manner (paragraph 0028)." However, Examples, Reference Examples and Comparative Examples thereof do not refer to the cross-sectional shape, so it is considered that the cross-sectional shape is circular like the invention of Patent Document 1.

### Summary of Invention

The present invention has an object of providing a resin composition having a good compression moldability. In addition, the present invention provides a compression molded article obtained from this resin composition and a production method thereof.

The present invention provides a resin composition, which contains:
a resin-impregnated fiber bundle prepared by impregnating and integrating 100 parts by mass of a bundle of a fiber material (A) with 25 to 300 parts by mass of a thermoplastic resin (B); and
a lubricant (C)
wherein
the resin-impregnated fiber bundle has a flat shape with a widthwise cross-sectional shape having a major axis and a minor axis, wherein the length of the major axis is greater than the length of the minor axis;
an average length (d1) of the major axis is 0.5 to 4.0 mm;
an average flatness ratio (d1/d2) determined from the average length (d1) of the major axis and an average length (d2) of the minor axis is 1.2 to 8.0;
the resin-impregnated fiber bundle has a length (L) of 3 to 50 mm and a ratio (L/d1) between the L and the d1 is 10 to 50;
the lubricant is contained in an amount of 0.001 to 0.05 parts by mass relative to 100 parts by mass of the resin-impregnated fiber bundle; and
the resin composition has a bulk density of 0.1 to 0.4 g/cm³.

The resin composition of the present invention has a good compression moldability (metal mold releasability) when it is used for production of a compression molded article, and the obtained compression molded article has a good mechanical strength.

### Brief Description of Drawing

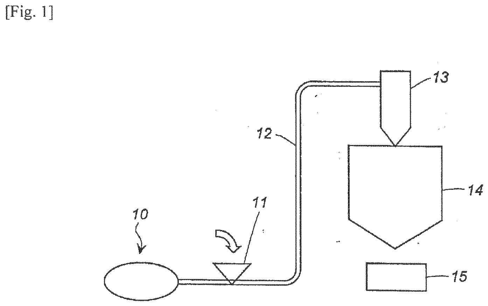

[Fig. 1] Fig. 1 is an explanatory drawing of a conveyance property test method on Examples and Comparative Examples.

### Examples for Carrying out the Invention

### <Resin composition>

The resin composition of the present invention contains:
a resin-impregnated fiber bundle containing Components A and B; and Component C, a lubricant, which is externally added to the resin-impregnated fiber bundle and thus contained separately from the resin-impregnated fiber bundle.

The fiber material used for a bundle of fiber material (Component A) is preferably selected from carbon fibers, glass fibers, aramid fibers, and combinations thereof, but it is not limited thereto. The number of bundles of fiber material is adjusted by taking into consideration the outer diameter (major axis length and minor axis length) of a resin-impregnated fiber bundle, and for example, the number may be selected from the range of 100 to 30,000, preferably 1,000 to 24,000.

As the thermoplastic resin (Component B), usable is one selected from polyamide resins (Polyamide 6, Polyamide 66, Polyamide 12, etc.), olefin resins (polypropylene, high-density polyethylene, acid-modified polypropylene, etc.), polyphenylene sulfide resins, polyesters (polyethylene terephthalate, polybutylene terephthalate, etc.), thermoplastic urethane resins (TPU), polyoxymethylene resins (POM), ABS resins, polycarbonate resins, an alloy of a polycarbonate resin and an ABS resin, and others. As the thermoplastic resin (Component B), an alloy composed of two or more resins may be used; and in that case, an appropriate compatibilizing agent may be contained.

The content ratios of the bundle of fiber material (Component A) and the thermoplastic resin (Component B), while the total of Components A and B is taken as 100% by mass, are set to preferably 30 to 80% by mass of Component A and 70 to 20% by mass of Component B; preferably 40 to 75% by mass of Component A and 60 to 25% by mass of Component B; and preferably 50 to 70% by mass of Component A and 50 to 30% by mass of Component B.

The content ratios of the bundle of fiber material (Component A) and the thermoplastic resin (Component B), while the total of Components A and B is taken as 100% by mass, are set to preferably 70 to 20% by mass of Component A and 30 to 80% by mass of Component B; preferably 60 to 25% by mass of Component A and 40 to 75% by mass of Component B; and preferably 50 to 30% by mass of Component A and 50 to 70% by mass of Component B.

The resin-impregnated fiber bundle may contain a publicly-known additive for resin in accordance with the use. Examples of the additive for resin include a flame retardant, a heat stabilizer, a light stabilizer, a coloring agent, an antioxidant, an antistatic agent and others.

When the resin-impregnated fiber bundle contains a lubricant that is not externally added (that is internally added), this does not improve the metal mold releasability at the time of compression molding. Further, in the case that the lubricant is externally added and also internally added, this improves the metal mold releasabiliy, but it disadvantageously increases a production cost and deteriorates the rigidity.

The resin-impregnated fiber bundle has a flat shape with a widthwise cross sectional shape having a major axis and a minor axis, wherein the length of the major axis is greater than the length of the minor axis. The major axis of the resin-impregnated fiber bundle has an average length (d1) of 0.5 to 4.0 mm, preferably 0.5 to 2.0 mm, and preferably 0.5 to 1.8 mm.

The average flatness ratio (d1/d2) of the resin-impregnated fiber bundle is calculated from the average length (d1) of the major axis and the average length (d2) of the minor axis, and the ratio is 1.2 to 8.0, and preferably 1.2 to 6.0. Note that d1/d2=1.0 provides a circular shape, and thus, d1 is equal to d2, which is a diameter.

The length (L) of the resin-impregnated fiber bundle is 3 to 50 mm, preferably 11 to 50 mm, and preferably 15 to 40 mm. The ratio between L and d1 (L/d1) is 10 to 50, and preferably 20 to 50.

In one embodiment, the resin-impregnated fiber bundle has an average length (d1) of major axis of 0.5 to 2.0 mm; the average flatness ratio (d1/d2) calculated from the average length (d1) of the major axis and the average length (d2) of the minor axis is 1.2 to 8.0; the resin-impregnated fiber bundle has a length (L) of 11 to 50 mm; and the ratio between L and d1 (L/d1) is 10 to 50.

The resin-impregnated fiber bundle includes a bundle having a non-elliptical widthwise cross-sectional shape. In the bundle having a non-elliptical lateral cross-sectional shape, some of surfaces are flat, and for example, all or a part of surfaces facing the minor axis are flat.

If resin-impregnated fiber bundles have the same major axis, a bundle having a shorter minor axis (having a flat surface) is preferred since it is easy to enter a narrow gap.

As a method for producing a resin-impregnated fiber bundle, a method using a crosshead die is publicly known, and the production may be carried out in accordance with a method described in, for example, JP-A 2013-107979 (Production Example 1, Production of a resin-impregnated glass long fiber bundle), JP-A 2013-121988 (Production Example 1, Production of a resin-impregnated glass long fiber bundle), JP-A 2012-52093 (Examples 1 to 9), JP-A 2012-131104 (Production Example 1, Production of a resin-impregnated glass long fiber bundle; Production Example 2, Production of a resin-impregnated carbon fiber long fiber bundle), JP-A 2012-131918 (Production Example 1, Production of a resin-impregnated carbon fiber bundle; Production Example 2, Production of a resin-impregnated glass fiber bundle), JP-A 2011-162905 (Example 1), and JP-A 2004-14990 (Example 1 to 7).

For producing a resin-impregnated fiber bundle having the above-described flatness ratio, applicable is a method for controlling an exit shape of a crosshead die, or a method wherein a bundle is passed between two rollers (forming rollers) arranged above and below the bundle at a stage after being discharged from an exit of a crosshead die and before being cooled.

As Component C, a publicly-known lubricant may be used; however, in the present invention, magnesium stearate and calcium stearate may be preferred, and these may be used alone or in combination.

Component C is contained in the composition of the present invention in an amount of preferably 0.001 to 0.05 parts by mass, and more preferably 0.005 to 0.05 parts by mass relative to 100 parts by mass of the resin-impregnated fiber bundle.

The composition of the present invention has a bulk density of 0.1 to 0.4 g/cm³, preferably 0.1 to 0.3 g/cm³, and more preferably 0.1 to 0.2 g/cm³.

### <Compression molded article>

A compression molded article of the present invention is in such a state that, in a state where a required amount of the resin composition is randomly arranged, resin-impregnated fiber bundles contained in the composition are fused with each other.

The required amount of the resin composition is a total number of resin-impregnated fiber bundles to be used in accordance with the size (volume) and the density of a compression molded article of interest. The total number of resin-impregnated fiber bundles can be calculated by determining the size (volume) and the density of a reference compression molded article and acquiring the total number of resin-impregnated fiber bundles required therefor by means of prototyping. The size (volume) and the density of a compression molded article of interest can be determined in accordance with the use.

The compression molded article of the present invention may be, for example:
(I) in such a form that, in a state where a required amount of the resin composition (resin-impregnated fiber bundles) is randomly arranged only in a plane direction (in a two-dimensionally arranged state), the resin-impregnated fiber bundles in contact are fused with each other; or
(II) in such a form that, in a state where a required amount of the resin composition (resin-impregnated fiber bundles) is randomly arranged in a plane direction and in a direction oblique to the plane direction (in a three-dimensionally arranged state), the resin-impregnated fiber bundles in contact are fused with each other.

When the resin-impregnated fiber bundles contained in the composition of the present invention have a flatness ratio in a preferred range of 1.2 to 8.0, contiguous resin-impregnated fiber bundles easily come into contact with each other thereby to provide an increased contact area in both of the above forms (I) and (II) compared to the case where the cross-section has a circular shape or an elliptical shape close thereto. Thus, the resin-impregnated fiber bundles are easily fused with each other when they are placed in a heating atmosphere.

Further, it is preferred when the resin-impregnated fiber bundles contained in the composition of the present invention have a flatness ratio in a preferred range of 1.2 to 8.0 as they easily turn into the form (II) compared to the case where the cross-section has a circular shape or an elliptical shape close thereto. For example, when there are gaps among resin-impregnated fiber bundles, it is difficult for bundles with a circular cross-sectional shape to enter the gaps but it is easy for bundles with a flattened cross-sectional shape to enter the gaps, thereby making it easy to provide a three-dimensional arrangement.

Especially, use of resin-impregnated fiber bundles contained in the composition of the present invention having a flat surface is more likely to provide the form (II), and thus, it is preferred.

The compression molded article of the present invention has a thickness of 1.5 to 10 mm and a density of 1.00 to 1.80 g/cm³. The compression molded article of the present invention has especially a high surface impact strength; and therefore, when it is formed into an article with a plate shape, it can possess a largely extended working life.

### <Method for producing a compression molded article>

A method for producing a compression molded article of the present invention will be described. At a first process, a required amount of resin composition is randomly charged. Since the resin composition contains Component C or an externally-added lubricant and has as small as a bulk density of 0.1 to 0.4 g/cm³, the unevenness in the thickness of the resin-impregnated fiber bundles charged into the heating container is small and the thickness is nearly even.

Note that addition of vibrations to the heating container if necessary enables leveling of the thickness of the charged resin composition. When the vibrations are added, three methods including adding vertical vibrations, adding horizontal vibrations and adding both vertical and horizontal vibrations to the heating container may be applied. However, a method for adding vertical vibrations or both vertical and horizontal vibrations is preferred since the thickness of resin composition is controlled for a shorter time period.

At a next process, the resin composition (resin-impregnated fiber bundles) in the heating container is pre-heated by a non-contact heater. The non-contact heater preferably has a heat source selected from infrared radiation, near infrared radiation, induction heating (IH) and hot-air.

The pre-heating is carried out until the resin composition (resin-impregnated fiber bundles) charged into the heating container is fused and integrated with each other in such a degree that the entire thereof does not move. The resin composition (resin-impregnated fiber bundles) used at the previous process has as small as a bulk density of 0.1 to 0.4 g/cm³ and many gaps are present among the resin composition (resin-impregnated fiber bundles). Thus, use of even a non-contact heater enables quick heat diffusion over the entire of the resin composition (resin-impregnated fiber bundles) in the heating container, and thus, a short period of treatment allows the integration.

At a next process, the pre-heated resin composition (resin-impregnated fiber bundles) is compressed, thereby providing a compression molded article. In this compression process, the integrated product of the resin composition (resin-impregnated fiber bundles) obtained at the previous process is placed into a press metal mold, and then, compressed.

In the compression process, a heat and cool molding method may be applied in order to shorten a molding cycle period or enhance a surface appearance. The heat and cool molding method is a method, which includes molding in a state where a mold temperature is quickly increased before compression molding, and then cooling rapidly.

Further, the above-described pre-heating treatment is conducted again on the article molded by compression molding, and then compression molding is conducted again. This improves the dispersibility of fibers in the molded article and enhances the homogeneity of the molded article, thus providing a further stable product (good dispersibility of fibers in the molded article allows the molded article to have stable mechanical properties).

The compression molded article is produced so as to have a thickness of 1.5 to 10 mm and a density of 1.00 to 1.80 g/cm³.

### Examples

### Production Example 1 (Production of resin-impregnated carbon fiber bundles)

A fiber bundle or Component A (carbon fiber: a bundle that is of about 12000 PAN-based carbon fibers with a diameter of 7 µm and is surface-treated with an epoxy sizing agent) of carbon long fibers bundled with a binder was passed through a crosshead die.

At that time, a molten product of polypropylene or Component B (PMB02A manufactured by SunAllomer Ltd.) was fed to the crosshead die from other biaxial extruder (having a cylinder temperature of 290°C), so that the carbon long fiber bundle was impregnated therewith. Thereafter, the bundle was shaped by a shaping nozzle at an exit of the crosshead die and the shape thereof was adjusted by shaping rollers; and then, it was cut into a predetermined length by a pelletizer, so that resin-impregnated carbon fiber bundles shown in Table 1 were obtained.

When the thus-obtained resin-impregnated carbon fiber bundle was cut and checked, carbon long fibers were almost parallel in a lengthwise direction and up to the center thereof was impregnated with the resin.

### Production Example 2 (Production of resin-impregnated glass fiber bundles)

A fiber bundle or Component A (glass fiber: a bundle that is of about 1600 E-glass fibers with a diameter of 13 µm and is surface-treated with an aminosilane coupling agent) of glass long fibers bundled with a binder was passed through a crosshead die.

At that time, a molten product of polypropylene or Component B (PMB02A manufactured by SunAllomer Ltd.) was fed to the crosshead die from other biaxial extruder (having a cylinder temperature of 290°C), so that the glass long fiber bundle was impregnated therewith. Thereafter, the bundle was shaped by a shaping nozzle at an exit of the crosshead die and the shape thereof was adjusted by shaping rollers; and then, it was cut into a predetermined length by a pelletizer, so that resin-impregnated fiber bundles shown in Table 2 were obtained.

When the thus-obtained resin-impregnated glass fiber bundle was cut and checked, glass long fibers were almost parallel in a lengthwise direction and up to the center thereof was impregnated with the resin.

The average length (d1) of the major axis and the average length (d2) of the minor axis were measured by the following method. 10 resin-impregnated carbon fiber bundles or resin-impregnated glass fiber bundles were prepared; their major axis lengths and minor axis lengths of the cross-section (the end face) were measured by use of a scanning electron microscope; and averages thereof were calculated. Specifically, among straight lines crossing the cross-section, a straight line having the longest length between two intersections where the straight line crosses the periphery of the cross-section is regarded as the major axis; and among straight lines vertically crossing the major axis, a straight line having the longest length between two intersections where the straight line crosses the periphery of the cross-section was regarded as the minor axis.

### Examples 1 to 4 and Comparative Examples 1 and 2

As Component C, an external additive-1 (calcium stearate) (SC-100, Sakai Chemical Industry Co., Ltd.) or an external additive-2 (magnesium stearate) (SM-1000, Sakai Chemical Industry Co., Ltd.) was mixed in an amount (parts by mass) indicated in Table 1 with 100 parts by mass of the resin-impregnated carbon fiber bundle obtained in Production Example 1, and a resin composition of the present invention was obtained. The obtained resin composition was tested in terms of the conveyance property and the measuring property.

### (Conveyance property)

A device shown in Fig. 1 was used to test the conveyance property. A resin composition was charged from a charging port 11 with 40 mm square, and then, a pressure feeding blower 10 (Roots blower SSR-100 manufactured by Tanaka Co., Ltd., airflow volume: 4.5 m³/min) was used to carry out pneumatic transportation by a pipe 12 (with a diameter of 50 mm) to a cyclone 13.

A height difference between the charging port 11 and an entry of the cyclone 13 was about 6 m. The resin composition conveyed to the cyclone 13 was transferred to a hopper 14, and then, a required amount thereof was charged and packed into a packing material 15. A case where pneumatic transportation from the charging port 11 to the cyclone 13 was carried out is expressed as "O" while a case where pneumatic transportation could not be carried out (the pipe was clogged) is expressed as "X."

### (Measuring property)

Measurement was conducted by a vibration feeder (TF WEIGHING FEEDER MTF30 manufactured by The Japan Steel Works, Ltd.). A case where a predetermined amount was measured accurately is expressed as "O" (the measurement error was within ±5%) while a case where measured values were varied is expressed as "X" (the measurement error exceeded ±5%).

A predetermined mass amount of the above-described resin composition containing resin-impregnated carbon fiber bundles or resin-impregnated glass fiber bundles (about 200 g of carbon fiber bundle; about 250 g of glass fiber bundle) was prepared, and charged into a stainless flat-bottomed container so that it had an almost uniform thickness from a position at height of 15 to 20 cm.

Thereafter, heating at 220°C for 100 seconds in a furnace (INFRASTEIN N7GS manufactured by NGK Insulators, Ltd.; equipped with an infrared heater as a heat source) was conducted three times in total. This heating treatment allowed the resin-impregnated carbon fiber bundles or the resin-impregnated glass fiber bundles in the flat-bottomed container to be integrated by fusion of polypropylene (temperature of polypropylene of about 210 to 230°C).

Thereafter, the integrated product of the resin composition was pressed for 10 seconds by a pressing machine (having an upper metal mold and a lower metal mold) (STI-1.6-220VF manufactured by Sanyu Industries Co., Ltd.). The pressing was carried out under pressing conditions: a metal mold temperature of 130°C and a pressure of 20 MPa. Then, the product was cooled to room temperature, so that a compression molded article having a square planar shape (length: 200 mm, width: 200 mm, thickness: 4 mm) was obtained.

### (Metal mold releasability)

For each of Examples and Comparative Examples, when pressing molding was conducted 10 times, the number of cases where a compression molded article was attached to an upper metal mold was counted when the upper metal mold was pulled up after completion of the press molding.

### (Tensile strength; MPa)

Measured in accordance with ISO527-1.

### (Bending strength; MPa)

Measured in accordance with ISO178.

### (Charpy impact strength; kJ/m²)

A notched Charpy impact strength was measured in accordance with ISO179/1eA.

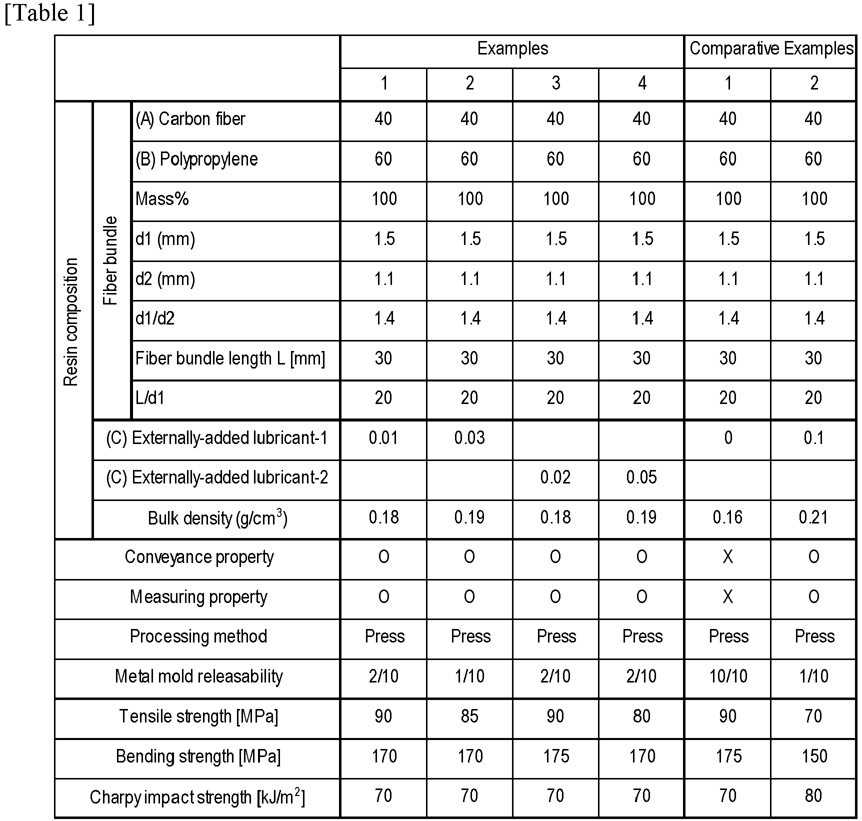

Comparative Example 1 with no external lubricant had a poor metal mold releasability. Comparative Example 2 with an excessive amount of external lubricant had a good metal mold releasability but had deteriorated tensile strength and bending strength.

### Examples 5 to 8 and Comparative Examples 3 and 4

As Component C, an external additive-1 (calcium stearate) (SC-100, Sakai Chemical Industry Co., Ltd.) or an external additive-2 (magnesium stearate) (SM-1000, Sakai Chemical Industry Co., Ltd.) was mixed in an amount (parts by mass) indicated in Table 2 with 100 parts by mass of the resin-impregnated glass fiber bundle obtained in Production Example 2, and a resin composition of the present invention was obtained. The obtained resin composition was tested in terms of the conveyance property and the measuring property in the same manner as for Examples 1 to 4.

About 150 g of the above-described resin composition containing resin-impregnated glass fiber bundles was prepared and a compression molded article (length: 200 mm, width: 200 mm, thickness: 2 mm; density: 1.50 g/cm³) was obtained in the same manner as in Examples 1 to 4. They were evaluated in terms of the metal mold releasability, the tensile strength, the bending strength and the Charpy impact strength in the same manner.

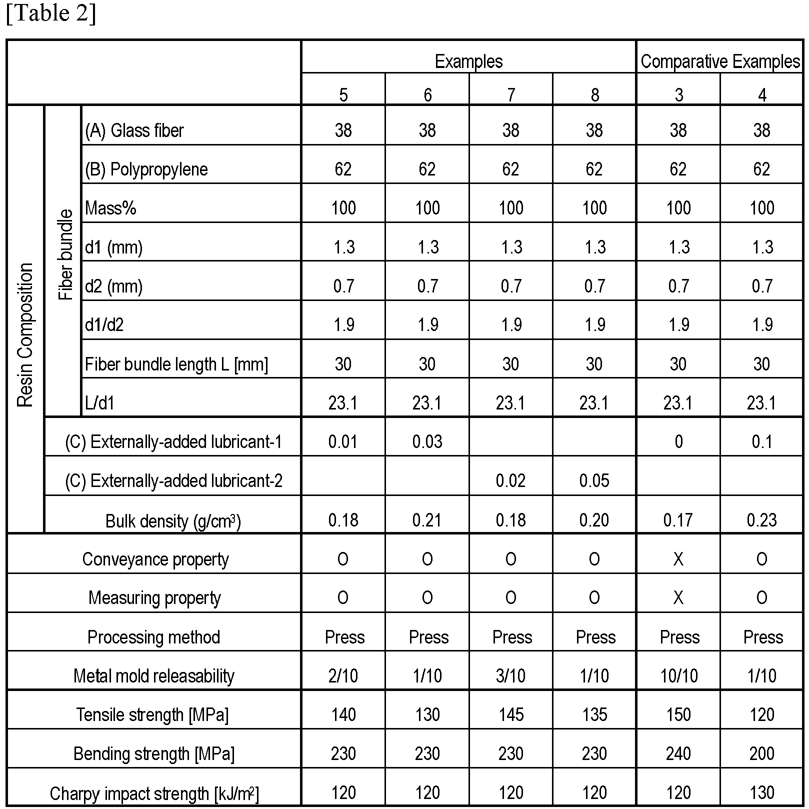

Comparative Example 3 with no external lubricant had a poor metal mold releasability. Comparative Example 2 had a good metal mold releasability but had deteriorated tensile strength and bending strength.

### Industrial Applicability

A compression molded article obtained from the resin composition of the present invention is thin and has a high surface impact strength, and thus, it can be used for automobile parts, machine parts, construction materials, tableware or trays for household use and business use, various daily necessities, parts for safety footwear, and others.

## Claims

1. A resin composition comprising a resin-impregnated fiber bundle prepared by impregnating and integrating 100 parts by mass of a bundle of a fiber material (A) with 25 to 300 parts by mass of a thermoplastic resin (B); and a lubricant (C), wherein:
the resin-impregnated fiber bundle has a flat shape with a widthwise cross-sectional shape having a major axis and a minor axis, wherein the length of the major axis is greater than the length of the minor axis;
the major axis has an average length (d1) of 0.5 to 4.0 mm;
an average flatness ratio (d1/d2) determined from the average length (d1) of the major axis and an average length (d2) of the minor axis is 1.2 to 8.0;
the resin-impregnated fiber bundle has a length (L) of 3 to 50 mm and a ratio (L/d1) between the L and the d1 is 10 to 50;
the lubricant is contained in an amount of 0.001 to 0.05 parts by mass relative to 100 parts by mass of the resin-impregnated fiber bundle; and
the resin composition has a bulk density of 0.1 to 0.4 g/cm³.

2. The resin composition according to Claim 1, wherein:
the resin-impregnated fiber bundle has the major axis with an average length (d1) of 0.5 to 2.0 mm;
and
the resin-impregnated fiber bundle has a length (L) of 11 to 50 mm and a ratio (L/d1) between the L and the d1 is 10 to 50.

3. The resin composition according to Claim 1 or 2, wherein the lubricant (C) is contained in an amount of 0.005 to 0.05 parts by mass relative to 100 parts by mass of the resin-impregnated fiber bundle.

4. The resin composition according to any one of Claims 1 to 3, wherein the lubricant (C) is selected from magnesium stearate and calcium stearate.

5. The resin composition according to any one of Claims 1 to 4, wherein the fiber material (A) is selected from a carbon fiber, a glass fiber and an aramid fiber.

6. A compression molded article composed of a resin composition according to any one of Claims 1 to 5, wherein:
the compression molded article is in such a form that, in a state where a required amount of the resin composition is randomly arranged, resin-impregnated fiber bundles contained in the composition are fused with each other; and
the compression molded article has a thickness of 1.5 to 10 mm and a density of 1.00 to 1.80 g/cm³.

7. A compression molded article composed of a resin composition according to any one of Claims 1 to 5, wherein:
the compression molded article is in such a form that, in a state where a required amount of the resin composition is randomly arranged in a plane direction and in a direction oblique to the plane direction, contacting resin-impregnated fiber bundles are fused with each other; and
the compression molded article has a thickness of 1.5 to 10 mm and a density of 1.00 to 1.80 g/cm³.

8. A method for producing a compression molded article according to Claim 6 or 7, the method comprising the steps of:
randomly charging a required amount of the resin composition into a heating container;
pre-heating the resin composition in the heating container by a non-contact heater; and
compressing the pre-heated resin composition.

## Patentansprüche

1. Harzzusammensetzung, umfassend ein harzimprägniertes Faserbündel, hergestellt durch Imprägnieren und Integrieren von 100 Masseteilen eines Bündels eines Fasermaterials (A) mit 25 bis 300 Masseteilen eines thermoplastischen Harzes (B), und ein Schmiermittel (C), wobei:
das harzimprägnierte Faserbündel eine flache Form mit einer Querschnittsform in Breitenrichtung mit einer Hauptachse und einer Nebenachse aufweist, wobei die Länge der Hauptachse größer als die Länge der Nebenachse ist;
die Hauptachse eine mittlere Länge (d1) von 0,5 bis 4,0 mm aufweist;
ein mittleres Ebenheitsverhältnis (d1/d2), das aus der mittleren Länge (d1) der Hauptachse und einer mittleren Länge (d2) der Nebenachse bestimmt wird, 1,2 bis 8,0 beträgt;
das harzimprägnierte Faserbündel eine Länge (L) von 3 bis 50 mm aufweist und ein Verhältnis (L/d1) zwischen dem L und dem d1 10 bis 50 beträgt;
das Schmiermittel in einer Menge von 0,001 bis 0,05 Masseteilen, bezogen auf 100 Masseteile des harzimprägnierten Faserbündels, enthalten ist und
die Harzzusammensetzung eine Schüttdichte von 0,1 bis 0,4 g/cm³ aufweist.

2. Harzzusammensetzung gemäß Anspruch 1, wobei:
das harzimprägnierte Faserbündels die Hauptachse mit einer mittleren Länge (d1) von 0,5 bis 2,0 mm aufweist;
und
das harzimprägnierte Faserbündel eine Länge (L) von 11 bis 50 mm aufweist und ein Verhältnis (L/d1) zwischen L und d1 10 bis 50 beträgt.

3. Harzzusammensetzung gemäß Anspruch 1 oder 2, wobei das Schmiermittel (C) in einer Menge von 0,005 bis 0,05 Masseteilen, bezogen auf 100 Masseteile des harzimprägnierten Faserbündels, enthalten ist.

4. Harzzusammensetzung gemäß einem der Ansprüche 1 bis 3, wobei das Schmiermittel (C) aus Magnesiumstearat und Calciumstearat ausgewählt ist.

5. Harzzusammensetzung gemäß einem der Ansprüche 1 bis 4, wobei das Fasermaterial (A) aus einer Kohlenstofffaser, einer Glasfaser und einer Aramidfaser ausgewählt ist.

6. Formgepresster Gegenstand, bestehend aus einer Harzzusammensetzung gemäß einem der Ansprüche 1 bis 5, wobei:
der formgepresste Gegenstand in einer solchen Form vorliegt, dass in einem Zustand, in dem eine erforderliche Menge der Harzzusammensetzung zufällig angeordnet ist, in der Zusammensetzung enthaltene harzimprägnierte Faserbündel miteinander verschmolzen sind, und
der formgepresste Gegenstand eine Dicke von 1,5 bis 10 mm und eine Dichte von 1,00 bis 1,80 g/cm³ aufweist.

7. Formgepresster Gegenstand, bestehend aus einer Harzzusammensetzung gemäß einem der Ansprüche 1 bis 5, wobei:
der formgepresste Gegenstand in einer solchen Form vorliegt, dass in einem Zustand, in dem eine erforderliche Menge der Harzzusammensetzung in einer Ebenenrichtung und in einer Richtung schräg zur Ebenenrichtung zufällig angeordnet ist, sich berührende harzimprägnierte Faserbündel miteinander verschmolzen sind, und
der formgepresste Artikel eine Dicke von 1,5 bis 10 mm und eine Dichte von 1,00 bis 1,80 g/cm³ aufweist.

8. Verfahren zum Herstellen eines formgepressten Artikels gemäß Anspruch 6 oder 7, wobei das Verfahren die Schritte umfasst:
zufälliges Einfüllen einer erforderlichen Menge der Harzzusammensetzung in einen Heizbehälter;
Vorwärmen der Harzzusammensetzung im Heizbehälter durch eine berührungslose Heizung und
Pressen der vorgewärmten Harzzusammensetzung.

## Revendications

1. Composition de résine comprenant un faisceau de fibres imprégnées de résine préparé en imprégnant et en intégrant 100 parties en masse d'un matériau de fibres (A) avec 25 à 300 parties en masse d'une résine thermoplastique (B) ; et un lubrifiant (C), dans laquelle :
le faisceau de fibres imprégnées de résine a une forme plate qui présente une section transversale dans le sens de la largeur ayant un axe majeur et un axe mineur, la longueur de l'axe majeur étant supérieure à la longueur de l'axe mineur ;
l'axe majeur a une longueur moyenne (d1) de 0,5 à 4,0 mm ;
un rapport de planéité moyen (d1/d2) déterminé à partir de la longueur moyenne (d1) de l'axe majeur et d'une longueur moyenne (d2) de l'axe mineur va de 1,2 à 8,0 ;
le faisceau de fibres imprégnées de résine a une longueur (L) de 3 à 50 mm et un rappport (L/d1) entre L et d1 va de 10 à 50 ;
le lubrifiant est présent à hauteur de 0,001 à 0,05 partie en masse pour 100 parties en masse du faisceau de fibres imprégnées de résine ; et
la composition de résine a une densité apparente de 0,1 à 0,4 g/cm³.

2. Composition de résine selon la revendication 1, dans laquelle :
le faisceau de fibres imprégnées de résine a une longueur moyenne (d1) de l'axe majeur de 0,5 à 2,0 mm ;
et
le faisceau de fibres imprégnées de résine a une longueur (L) de 11 à 50 mm et un rapport (L/d1) entre L et d1 va de 10 à 50.

3. Composition de résine selon la revendication 1 ou 2, dans laquelle le lubrifiant (C) est présent à hauteur de 0,005 à 0,05 partie en masse pour 100 parties en mase du faisceau de fibres imprégnées de résine.

4. Composition de résine selon l'une quelconque des revendications 1 à 3, dans laquelle le lubrifiant (C) est choisi parmi le stéarate de magnésium et le stéarate de calcium.

5. Composition de résine selon l'une quelconque des revendications 1 à 4, dans laquelle le matériau de fibres (A) est choisi parmi une fibre de carbone, une fibre de verre et une fibre d'aramide.

6. Article moulé par compression composé d'une composition de résine selon l'une quelconque des revendications 1 à 5, dans lequel :
l'article moulé par compression se présente sous une forme telle, que dans un état où une quantité requise de la composition de résine est disposée de manière aléatoire, des faisceaux de fibres imprégnées de résine présents dans la composition sont fusionnés les uns avec les autres ; et
l'article moulé par compression a une épaisseur de 1,5 à 10 mm et une masse volumique de 1,00 à 1,80 g/cm³.

7. Article moulé par compression composé d'une composition de résine de l'une quelconque des revendications 1 à 5, dans lequel :
l'article moulé par compression se présente sous une forme telle, que dans un état où une quantité requise de la composition de résine est disposée de manière aléatoire dans une direction plane et dans une direction oblique à la direction plane, des faisceaux de fibres imprégnées de résine en contact sont fusionnés les uns avec les autres ; et
l'article moulé par compression a une épaisseur de 1,5 à 10 mm et une masse volumique de 1,00 à 1,80 g/cm³.

8. Procédé de production d'un article moulé par compression selon la revendication 6 ou 7, le procédé comprenant les étapes consistant à :
introduire aléatoirement une quantité souhaitée de la composition de résine dans un récipient chauffant ;
préchauffer la composition de résine dans le récipient chauffant au moyen d'un appareil chauffant sans contact ; et
comprimer la composition de résine préchauffée.
